# EUROPEAN PATENT APPLICATION

(11) **EP 4 764 364 A1**
(43) Date of publication of application: **24.06.2026**
(21) Application number: 24915439.4
(22) Date of filing: 30.12.2024
(51) Int. Cl.: F25D 19/04, F25D 15/00, F25D 23/00, F25D 29/00, B01D 46/00, F25B 21/02

(54) **REFRIGERATOR**

(30) Priority: 05.01.2024 KR 20240002510; 07.03.2024 KR 20240032872
(71) Applicant: Samsung Electronics Co., Ltd., Suwon-si, Gyeonggi-do 16677 (KR)
(72) Inventor: YOOK, Minseob, Suwon-si Gyeonggi-do 16677 (KR); KANG, Changgu, Suwon-si Gyeonggi-do 16677 (KR); KO, Sungbok, Suwon-si Gyeonggi-do 16677 (KR); SON, Seokjun, Suwon-si Gyeonggi-do 16677 (KR); YOON, Wonjae, Suwon-si Gyeonggi-do 16677 (KR); LIM, Bongkeun, Suwon-si Gyeonggi-do 16677 (KR); HAN, Hyoju, Suwon-si Gyeonggi-do 16677 (KR); JIN, Guangri, Suwon-si Gyeonggi-do 16677 (KR); KIM, Hyunjoo, Suwon-si Gyeonggi-do 16677 (KR)
(74) Representative: Gulde & Partner
(86) International application number: PCT/KR2024/021382
(87) International publication number: WO 2025/147027

(57) **Abstract**

A refrigerator may include: a body, a storage compartment inside the body, a thermoelectric module on an upper portion of the storage compartment and including: a thermoelectric element including: a heating and a cooling portion, a dissipating and a cooling sink in contact with the heating and cooling portion, respectively; a heat dissipation (HD) fan configured to generate an airflow, a HD duct having an inlet and outlet, the HD duct on an upper surface of the body and configured to guide the airflow through the inlet to the dissipating sink to exchange heat with the dissipating sink, and then out the outlet; and a dust filter mountable on the inlet and configured so that, with the dust filter mounted on the inlet and the HD fan generating the airflow, the dust filter prevents foreign substances in the airflow from entering inside the HD duct through the air inlet.

## Description

### [Technical Field]

The disclosure relates to a refrigerator, and more particularly, to a refrigerator having a thermoelectric element to cool a storage compartment.

### [Background Art]

In general, a refrigerator, an appliance for keeping food fresh, includes a main body having a storage compartment and a cold air supply device for supplying cold air to the storage compartment.

A refrigerator may use a thermoelectric cooling device that generates heating and cooling by the Peltier effect as the cold air supply device. The thermoelectric cooling device may include a thermoelectric element. The thermoelectric element may have a heating portion formed on one side and a cooling portion formed on the opposite side, and when a current is applied to the thermoelectric element, a heat-generating action may occur in the heating portion and a heat-absorbing action may occur in the cooling portion.

The thermoelectric cooling device may include a heat sink, a cooling sink, a heat dissipating fan, a cooling fan, a heat dissipating duct, and a cooling duct to increase the efficiency of cooling the storage compartment by the thermoelectric cooling device.

### [Disclosure]

### [Technical Problem]

An aspect of the present disclosure discloses a refrigerator including a thermoelectric cooling device using a thermoelectric element.

Further, an aspect of the present disclosure discloses a refrigerator having an increased efficiency of a thermoelectric cooling device.

Further, an aspect of the present disclosure discloses a refrigerator in which the performance of a thermoelectric cooling device may be sustainably maintained.

Technical tasks to be achieved in this document are not limited to the technical tasks mentioned above, and other technical tasks not mentioned will be clearly understood by those skilled in the art from the description below.

### [Technical Solution]

In accordance with the present disclosure, a refrigerator may include: a main body, a storage compartment inside the main body, a thermoelectric module on an upper portion of the storage compartment and including: a thermoelectric element including: a heating portion and a cooling portion, a dissipating sink in contact with the heating portion, and a cooling sink in contact with the cooling portion; a heat dissipation fan configured to generate a flow of air, a heat dissipation duct having an external air inlet and an external air outlet, the heat dissipation duct on an upper surface of the main body and configured to guide the flow of air through the external air inlet to the dissipating sink to exchange heat with the dissipating sink, and then out of the external air outlet; and a dust filter mountable on the external air inlet and configured so that, with the dust filter mounted on the external air inlet and the heat dissipation fan generating the flow of air, the dust filter prevents foreign substances in the flow of air from entering an inside of the heat dissipation duct through the external air inlet.

The refrigerator may further include a top cover couplable to the upper surface of the main body, wherein, with the top cover coupled to the upper surface, at least a portion of the top cover may overlap the heat dissipation duct.

The dust filter may be mountable to the top cover and may be configured so that, with the top cover coupled to the upper surface, the dust filter mounted to the top cover, and the heat dissipation fan generating the flow of air, the dust filter prevents foreign substances in the flow of air from entering an inside of the heat dissipation duct through the top cover.

The top cover may include a filter receiving space that may be configured to receive the dust filter.

The dust filter may be slidable in a first direction in the filter receiving space to be received in the filter receiving space, and the dust filter may be slidable in a second direction to be separated from the filter receiving space.

The top cover may include a pair of fixed rail portions that may be configured to support the dust filter when the dust filter is slid in the first direction and the second direction.

A first fixed rail portion of the pair of fixed rail portions may be on one side of the filter receiving space, and a second fixed rail portion of the pair of fixed rail portions may be on an other side of the filter receiving space opposite the one side.

The top cover may include an intake grille portion on an upper side of the filter receiving space that may include a plurality of grille ribs spaced apart from each other.

The plurality of grille ribs may slope downwardly toward a rear of the top cover.

The dust filter may include a filter member configured to filter foreign substances from the flow of air, and a filter frame configured to support the filter member.

The filter frame may include a pair of movable rail portions that may include: a first movable rail portion on a first end of the filter frame, and configured to be slidably supported on a first fixed rail portion of the pair of fixed rail portions, and a second movable rail portion on a second end of the filter frame, and configured to be slidably supported on a second fixed rail portion of the pair of fixed rail portions.

Each fixed rail portion of the pair of fixed rail portions may include: a horizontal fixed rail portion extending in a horizontal direction, and a vertical fixed rail portion extending downwardly from the horizontal fixed rail portion, and each movable rail portion of the pair of movable rail portions may include: a horizontal movable rail portion that may be configured to be supported on the horizontal fixed rail portion, and a vertical movable rail portion that may be configured to be supported on the vertical fixed rail portion.

The refrigerator may further include a filter sensor on the top cover and that may be configured to detect whether the dust filter is mounted.

The dust filter may include a magnet, and the filter sensor may include a reed switch that may be configured to change between an on state and an off state based on a separation distance between the reed switch and the magnet.

The external air inlet may be positioned closer to a front end of the upper surface of the main body than a central portion is to the front end.

According to another embodiment of the present disclosure, a refrigerator includes a main body; a storage compartment inside the main body, a door for opening or closing the storage compartment, a hinge rotatably coupling the door to the main body, a thermoelectric module disposed on an upper portion of the storage compartment, a heat dissipation fan generating flow of air, a heat dissipation duct having an external air inlet and an external air outlet, and coupled to an upper surface of the main body to guide the air flowing by the heat dissipation fan, and a top cover coupled to the upper surface of the main body to cover the hinge, wherein at least a portion of which is disposed on an upper side of the external air inlet, and a dust filter detachably mounted to the top cover to prevent foreign substances from entering an inside of the heat dissipation duct through the external air inlet.

The dust filter may be detachably mounted to the top cover by sliding in a front-to-back direction.

The top cover may be provided with a pair of fixed rail portions allowing the dust filter to be slidable, and the dust filter may be provided with a pair of movable rail portions corresponding to the pair of fixed rail portions.

The top cover may include an intake grille portion formed on an upper side of the filter receiving space and including a plurality of grille ribs arranged to be spaced apart from each other.

The plurality of grille ribs may be formed to slope downwardly toward the rear.

### [Advantageous Effects]

According to various embodiments of the present disclosure, the efficiency of a thermoelectric cooling device may be increased.

According to various embodiments of the present disclosure, the performance of the thermoelectric cooling device may be sustainably maintained.

The effects that can be obtained from the present disclosure are not limited to those mentioned above, and other effects not mentioned will be apparent to those of skilled in the art from the following description.

### [Description of Drawings]

FIG. 1 is a view illustrating a refrigerator according to an embodiment of the present disclosure.
FIG. 2 is a view illustrating the refrigerator according to an embodiment of the present disclosure with its doors open.
FIG. 3 is a view illustrating a storage compartment of the refrigerator according to an embodiment of the present disclosure from below.
FIG. 4 is a schematic side sectional view illustrating the refrigerator according to an embodiment of the present disclosure.
FIG. 5 is a cross-sectional view along line I-I of FIG. 2.
FIG. 6 is a view illustrating a top cover, a dust filter, and a heat dissipation duct separated from a main body of the refrigerator, according to an embodiment of the present disclosure.
FIG. 7 is a view illustrating a heat dissipation duct cover, a heat dissipation duct body, and a thermoelectric module according to one embodiment of the present disclosure in separation.
FIG. 8 is an exploded view illustrating the thermoelectric module according to an embodiment of the present disclosure.
FIG. 9 is a perspective view of a lower surface of the top cover according to an embodiment of the present disclosure.
FIG. 10 is a view illustrating a flow of air through a dissipation fan, a dissipation duct, and the top cover, according to one embodiment of the present disclosure.
FIG. 11 is a perspective view illustrating a lower surface of the dust filter according to an embodiment of the present disclosure.
FIG. 12 is a perspective view illustrating the dust filter mounted on the top cover according to an embodiment of the present disclosure.
FIG. 13 is a perspective view illustrating the dust filter removed from the top cover, according to an embodiment of the present disclosure.
FIG. 14 is a cross-sectional view taken along line II - II of FIG. 12.
FIG. 15 is a cross-sectional view taken along line III-III of FIG. 12.

### [Modes of the Invention]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

Terms such as "1st", "2nd", "primary", or "secondary" may be used simply to distinguish a component from other components, without limiting the component in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of each component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

A refrigerator according to an embodiment of the disclosure may include a main body.

The main body may include an insulation. The insulation may insulate inside of a storage compartment from outside of the storage compartment to maintain inside temperature of the storage compartment at appropriate temperature without being influenced by an external environment of the storage compartment. According to an embodiment of the disclosure, the insulation may include a foaming insulation such as a polyurethane foam. According to an embodiment of the disclosure, the insulation may include a vacuum insulation in addition to a foaming insulation, or may be configured only with a vacuum insulation instead of a forming insulation.

The storage compartment may store a variety of items, such as foods, medicines, cosmetics, and the like, and the storage compartment may be formed to be open on at least one side for storing or removing items.

The refrigerator may include one or more storage compartments. In a case in which two or more storage compartments are formed in the refrigerator, the respective storage compartments may have different purposes of use, and may be maintained at different temperature. To this end, the storage compartments may be partitioned by a partition wall including an insulation.

The storage compartment may be maintained within an appropriate temperature range according to a purpose of use, and include a "refrigerating compartment", a "freezing compartment", and a "temperature conversion compartment" according to purposes of use and/or temperature ranges. The refrigerating compartment may be maintained at appropriate temperature to keep food refrigerating, and the freezing compartment may be maintained at appropriate temperature to keep food frozen. The "refrigerating" may be keeping food cold without freezing the food, and for example, the refrigerating compartment may be maintained within a range of 0 degrees Celsius to 7 degrees Celsius. The "freezing" may be freezing food or keeping food frozen, and for example, the freezing compartment may be maintained within a range of -20 degrees Celsius to -1 degrees Celsius. The temperature conversion compartment may be used as any one of a refrigerating compartment or a freezing compartment according to or regardless of a user's selection.

The storage compartment may also be called various other terms, such as "vegetable compartment (also referred to as room)", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below need to be understood to represent storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted on the front of the main body.

The door may seal the storage compartment in a closed state. The door may include an insulation, like the main body, to insulate the storage compartment in the closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forms the front surface of the door. The door body may include an outer door plate that forms the front surface of the door body, an inner door plate that forms the rear surface of the door body and faces the storage compartment, an upper cap, a lower cap, and a door insulator provided therein.

The refrigerator may be classified as French Door Type, Side-by-side Type, Bottom Mounted Freezer (BMF), Top Mounted Freezer (TMF), or One Door Refrigerator depending on the arrangement of the doors and the storage compartments.

The refrigerator according to an embodiment of the disclosure may include a cold air supply device for supplying cold air to the storage compartment.

The cold air supply device may include a machine, an apparatus, an electronic device, and/or a combination system thereof, capable of generating cold air and guiding the cold air to cool the storage compartment.

According to an embodiment of the disclosure, the cold air supply device may generate cold air through a cooling cycle including compression, condensation, expansion, and evaporation processes of refrigerants. To this end, the cold air supply device may include a cooling cycle device having a compressor, a condenser, an expander, and an evaporator to drive the cooling cycle. According to an embodiment of the disclosure, the cold air supply device may include a semiconductor such as a thermoelectric element. The thermoelectric element may cool the storage compartment by heating and cooling actions through the Peltier effect.

The refrigerator according to an embodiment of the disclosure may include a machine compartment where at least some components belonging to the cold air supply device are installed.

The machine compartment may be partitioned and insulated from the storage compartment to prevent heat generated from the components installed in the machine compartment from being transferred to the storage compartment. To dissipate heat from the components installed inside the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice generated in the ice-making tray.

The refrigerator according to an embodiment of the disclosure may include a controller for controlling the refrigerator.

The controller may include a memory for storing and/or memorizing data and/or programs for controlling the refrigerator, and a processor for outputting control signals for controlling the cold air supply device, etc. according to the programs and/or data memorized in the memory.

The memory may store or record various information, data, commands, programs, and the like necessary for operations of the refrigerator. The memory may store temporary data generated while generating control signals for controlling components included in the refrigerator. The memory may include at least one of volatile memory or non-volatile memory, or a combination thereof.

The processor may control the overall operation of the refrigerator. The processor may control the components of the refrigerator by executing programs stored in memory. The processor may include a separate neural processing unit (NPU) that performs an operation of an artificial intelligence (AI) model. In addition, the processor may include a central processing unit (CPU), a graphics processor (GPU), and the like. The processor may generate a control signal to control the operation of the cold air supply device. For example, the processor may receive temperature information of the storage compartment from a temperature sensor, and generate a cooling control signal for controlling an operation of the cold air supply device based on the temperature information of the storage compartment.

Furthermore, the processor may process a user input of a user interface and control an operation of the user interface according to the programs and/or data memorized/stored in the memory. The user interface may be provided using an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all the components included in the refrigerator, and may include a plurality of processors and a plurality of memories for individually controlling the components of the refrigerator. For example, the refrigerator may include a processor and a memory for controlling the operation of the cold air supply device according to an output of the temperature sensor. In addition, the refrigerator may be separately equipped with a processor and a memory for controlling the operation of the user interface according to the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

Hereinafter, various embodiments according to the disclosure will be described in detail with reference to the accompanying drawings.

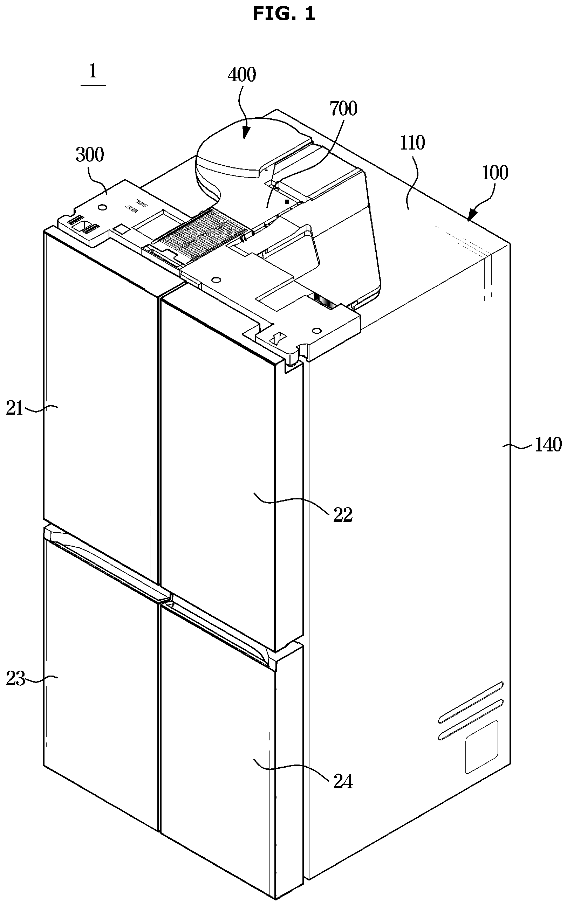

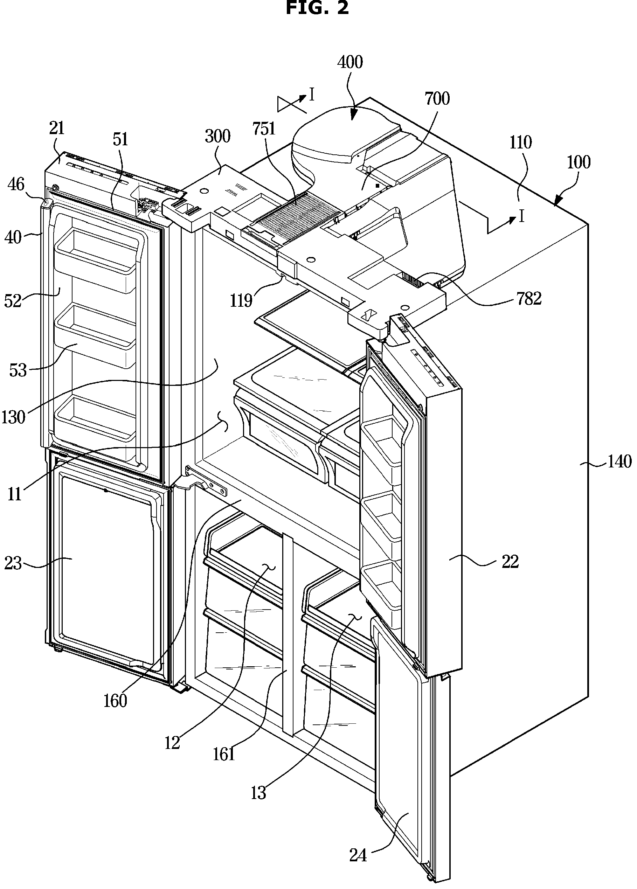

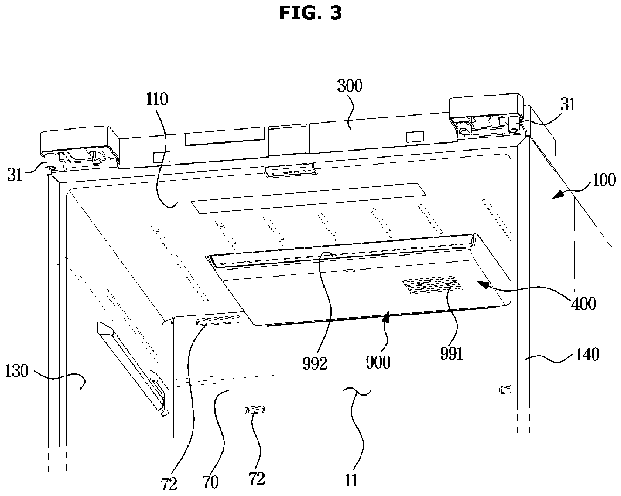

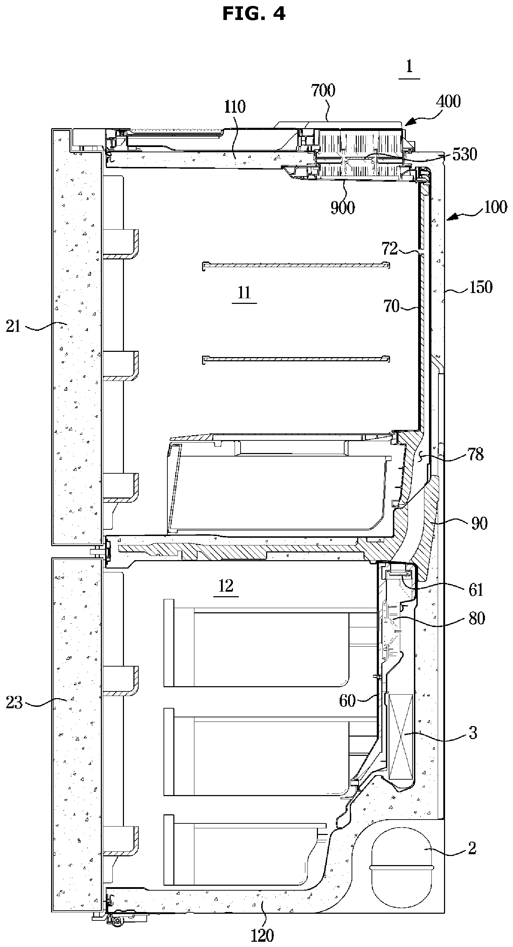

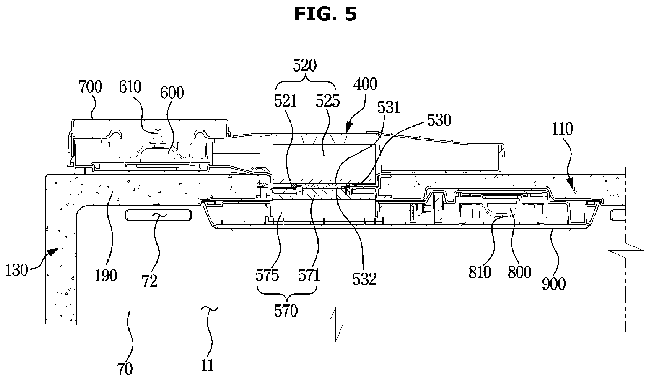

FIG. 1 is a view illustrating a refrigerator according to an embodiment of the present disclosure. FIG. 2 is a view illustrating the refrigerator according to an embodiment of the present disclosure with its doors open. FIG. 3 is a view illustrating a storage compartment of the refrigerator according to an embodiment of the present disclosure from below. FIG. 4 is a schematic side sectional view illustrating the refrigerator according to an embodiment of the present disclosure. FIG. 5 is a cross-sectional view along line I-I of FIG. 2.

Referring to FIGS. 1 to 5, a refrigerator 1 may include a main body 100, storage compartments 11, 12 and 13 formed in an inside of the main body 100, and doors 21, 22, 23 and 24 provided to open or close the storage compartments 11, 12 and 13.

The main body 100 may include an inner case 170, an outer case 180 coupled to an outer side of the inner case 170, and an insulation 190 disposed between the inner case 170 and the outer case 180. The inner case 170 may form the storage compartments 11, 12 and 13, and the outer case 180 may form an exterior of the main body 100.

In another aspect, the main body 100 may include an upper wall 110, a lower wall 120, a left wall 130, a right wall 140, and a rear wall 150. The upper wall 110, the lower wall 120, the left wall 130, the right wall 140, and the rear wall 150 may form an upper surface, a lower surface, a left surface, a right surface, and a rear wall of the main body 100, respectively.

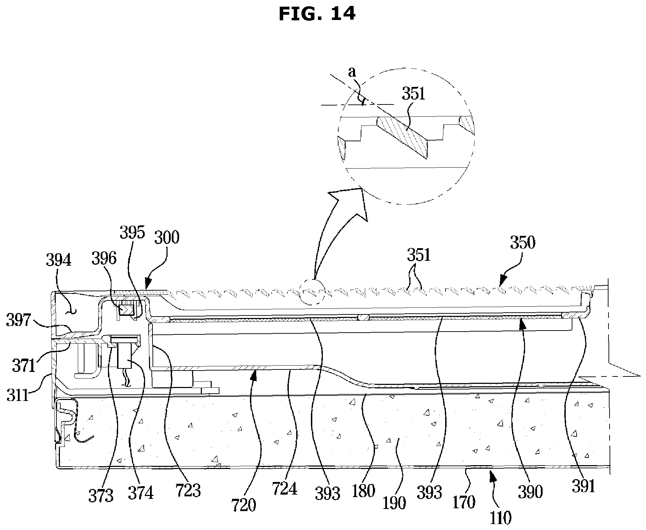

The upper wall 110, the lower wall 120, the left wall 130, the right wall 140, and the rear wall 150 may each be formed by the inner case 170, an outer case 180, and the insulation 190. In an example, an upper surface of the upper wall 110 may be formed by the outer case 180, a lower surface of the upper wall 110 may be formed by the inner case 170, and the insulation 190 may be disposed within the upper wall 110 (see FIG. 14).

The storage compartments 11, 12 and 13 may accommodate items (e.g., food items). The storage compartments 11, 12 and 13 may be formed to be open at a front side to allow items to be put in or taken out. The main body 100 may include a horizontal partition 160 that divides the storage compartments 11, 12 and 13 into an upper storage compartment 11 and lower storage compartments 12 and 13, and a vertical partition 161 that divides the lower storage compartments 12 and 13 into a second storage compartment 12 and a third storage compartment 13. The first storage compartment 11 may be a refrigerating room, the second storage compartment 12 may be a freezing room, and the third storage compartment 13 may be a temperature conversion room.

The doors 21, 22, 23 and 24 may open or close the storage compartments 11, 12 and 13. The first door 21 and the second door 22 may open or close the first storage compartment 11, the third door 23 may open or close the second storage compartment 12, and the fourth door 24 may open or close the third storage compartment 13. The doors 21, 22, 23 and 24 may be rotatably coupled to the main body 100.

The doors 21, 22, 23 and 24 may be rotatably coupled to the main body 100 by hinges. For example, the first door 21 and the second door 22 may be rotatably coupled to the main body 100 by a hinge 31 provided at an upper portion of the main body 100 and a hinge provided in the middle of the main body 100, respectively. The hinge 31 may include a hinge pin protruding vertically to form a rotational axis of the door. The hinge 31 may be covered by a top cover 300 configured to cover an upper front portion of the main body 100.

A rotation bar 40 may be provided on one of the first door 21 and the second door 22 to cover a gap formed between the first door 21 and the second door 22 when the first door 21 and the second door 22 are closed. The rotation bar 40 may be arranged to be rotatable on one of the first door 21 and the second door 22. The rotation bar 40 may have the shape of a rod elongated in a vertical direction. The rotation bar 40 may also be referred to as a pillar, a mullion, or the like.

A guide protrusion 46 may be provided on an upper end of the rotation bar 40, and a rotation guide 119 that guides rotation of the guide protrusion 46 may be provided on an upper end of the main body 100.

Each of the doors 21, 22, 23 and 24 may include a gasket 51. Each gasket 51 may be pressed against a front surface of the main body 100 in response to closing of the doors 21, 22, 23 and 24. The doors 21, 22, 23 and 24 may include a dyke 52 protruding rearwardly. The dyke 52 may be provided with a door shelf 53 that for storing items. The rotation bar 40 may be rotatably mounted on the dyke 52.

Although the number and arrangement of the storage compartments and the number and arrangement of the doors have been described above, but there is no limitation on the number and arrangement of the storage compartments and the number and arrangement of the doors of the refrigerator according to an embodiment of the present disclosure.

The refrigerator 1 may include a thermoelectric cooling device 400 configured to cool the storage compartment 11.

The thermoelectric cooling device 400 may be provided on an upper side of the storage compartment 11 so as to cool the storage compartment 11. In other words, the thermoelectric cooling device may be arranged on the upper wall 110 of the main body 100.

The thermoelectric cooling device may include a thermoelectric element 530. The thermoelectric element 530 may be a semiconductor element that converts thermal energy into electrical energy using the thermoelectric effect, and may also be referred to as a thermoelectric semiconductor element, a Peltier element, or the like.

The thermoelectric element 530 may include a heating portion 531 and a cooling portion 532. In response to a current applied to the thermoelectric element 530, a heat-generating action may occur in the heating portion 531 and a heat-absorbing action may occur in the cooling portion 532. The thermoelectric element 530 may have a thin hexahedral shape. The heating portion 531 may be provided on one side of the thermoelectric element 530 and the cooling portion 532 may be provided on the opposite side.

The thermoelectric element 530 may be arranged on the upper wall 110 such that the heating portion 531 faces upward of the thermoelectric element 530 and the cooling portion 532 faces downward of the thermoelectric element 530. In other words, the heating portion 531 may face an outer side of the main body 100 and the cooling portion 532 may face an inner side of the storage compartment 11. Accordingly, air heated by heat exchange with the heating portion 531 may be discharged to the outside of the main body 100 and air cooled by heat exchange with the cooling portion 532 may be supplied to the storage compartment 11.

The thermoelectric cooling device 400 may include a dissipating sink 520 in contact with the heat-generating portion 531 to allow heat exchange between the heat-generating portion 531 and the air outside the main body 100 to be efficiently performed.

The dissipating sink 520 may be located on the outside of the main body 100. The dissipating sink 520 may contact the heat-generating portion 531 to absorb heat from the heat-generating portion 531 and dissipating the heat to the outside of the main body 100. The dissipating sink 520 may also be referred to as a hot sink, a heat dissipating sink, a hot heat sink, or the like.

The dissipating sink 520 may be formed of a metallic material having good thermal conductivity. For example, the dissipating sink 520 may be formed of aluminum or copper.

The dissipating sink 520 may include a dissipation sink base 521 that contacts the heat-generating portion 531 and a plurality of heat dissipation fins 525 that protrude from the dissipation sink base 521 to increase the heat transfer area. The plurality of heat dissipation fins 525 may protrude upwardly from the dissipation sink base 521.

The thermoelectric cooling device 400 may include a cooling sink 570 that contacts the cooling portion 532 to allow heat exchange between the cooling portion 532 and the air inside the storage compartment 11 to be efficiently performed.

The cooling sink 570 may be located on the inside of the storage compartment 11. The cooling sink 570 may cool the storage compartment 11 by removing heat from the storage compartment 11 and transferring the heat to the cooling portion 532. The cooling sink 570 may also be referred to as a cold sink, a chilling sink, a cooling heat sink, a cold heat sink, a cooling heat sink, or the like.

The cooling sink 570 may be formed of a metallic material having good thermal conductivity. For example, the cooling sink 570 may be formed of aluminum or copper.

The cooling sink 570 may include a cooling sink base 571 that contacts the cooling portion 532 and a plurality of cooling fins 575 that protrude from the cooling sink base 571 to increase the heat transfer area. The plurality of cooling fins 575 may protrude downwardly from the cooling sink base 571. The cooling sink base 571 and the plurality of cooling fins 575 may be formed integrally.

The thermoelectric cooling device 400 may include a heat dissipation fan 600 that flows air to efficiently exchange heat between the dissipating sink 520 and the air outside the main body 100.

The heat dissipation fan 600 may be arranged to blow toward the dissipating sink 520. The heat dissipation fan 600 may be arranged to be positioned in a horizontal direction of the dissipating sink 520. The heat dissipation fan 600 may be positioned on the outside of the main body 100. The heat dissipation fan 600 may be arranged on the upper side of the upper wall 110.

The heat dissipation fan 600 may be a centrifugal fan that draws in air in an axial direction and discharges the drawn air in a radial direction. The centrifugal fan may include a blower fan. A rotational shaft 610 of the heat dissipation fan 600 may be arranged perpendicular to the upper surface of the upper wall 110.

The thermoelectric cooling device 400 may include a heat dissipation duct 700 configured to guide air flowing by the heat dissipation fan 600. The heat dissipation duct 700 may draw in air from outside the main body 100 and guide the drawn air to exchange heat with the dissipating sink 520, and may discharge the air that has exchanged heat with the dissipating sink 520 back to the outside of the main body 100.

The heat dissipation duct 700 may draw in air from an external space above the main body 100. The heat dissipation duct 700 may discharge air that has exchanged heat with the dissipating sink 520 to the external space on the upper side of the main body 100. The heat dissipation fan 600 may be located on an inside of the heat dissipation duct 700. The dissipating sink 520 may be located on the inside of the heat dissipation duct 700. The heat dissipation duct 700 may be located on the upper surface of the upper wall 110.

The heat dissipation duct 700 may include an external air inlet 751 that draws air from the outside of the main body 100 into the inside of the heat dissipation duct 700 and an external air outlet 782 that discharges air that has exchanged heat with the dissipating sink 520 to the outside of the main body 100.

The thermoelectric cooling device 400 may include a cooling fan 800 that circulates air to efficiently exchange heat between the cooling sink 570 and the air inside the storage compartment 11.

The cooling fan 800 may be arranged to blow toward the cooling sink 570. The cooling fan 800 may be arranged to be positioned in a horizontal direction of the cooling sink 570. The cooling fan 800 may be positioned on the inside of the storage compartment 11. The cooling fan 800 may be arranged on the lower side of the upper wall 110.

The cooling fan 800 may be a centrifugal fan that draws in air in the axial direction and discharges the drawn air in the radial directions. A rotational shaft 810 of the cooling fan 800 may be arranged vertically on the lower surface of the upper wall 110.

The thermoelectric cooling device 400 may include a cooling duct 900 configured to guide air flowing by the cooling fan 800. The cooling duct 700 may draw in air from the inside of the storage compartment 11 and guide the drawn air to exchange heat with the cooling sink 570, and may discharge the air that has exchanged heat with the cooling sink 570 back into the storage compartment 11.

The cooling fan 800 may be located on the inside of the cooling duct 900. The cooling sink 570 may be located on the inside of the cooling duct 900. The cooling duct 800 may be located on the lower surface of the upper wall 110.

The cooling duct 900 may include an internal air inlet 991 that draws air from the inside of the storage compartment 11 into the inside of the cooling duct 900, and an internal air outlet 992 that discharges air that has exchanged heat with the cooling sink 570 into the inside of the storage compartment 11.

The refrigerator 1 may include a refrigeration cycle device to cool the storage compartment through a refrigeration cycle. The refrigeration cycle device may include a compressor 2, a condenser (not shown), an expansion device (not shown), and an evaporator 3. The evaporator 3 may be arranged on a rear side of the storage compartment 12 and 13.

The refrigerator 1 may include evaporator ducts 60 and 70 that guide cold air generated by the evaporator 3. A first evaporator duct 60 may be arranged on the rear side of the second storage compartment 12 and the third storage compartment 13. A second evaporator duct 70 may be arranged on the rear side of the first storage compartment 11.

The cold air generated by the evaporator 3 may be drawn into the interior of the first evaporator duct 60 by an evaporator fan 80. The cold air drawn into the interior of the first evaporator duct 60 may be discharged to the second storage compartment 12 or the third storage compartment 13 through a cold air outlet (not shown) formed the front. In addition, the cold air drawn into the interior of the first evaporator duct 60 may be guided to an inner channel 78 of the second evaporator duct 70. The first evaporator duct 60 may be provided with a damper 61 that controls the supply of cold air from the inside of the first evaporator duct 60 to the second evaporator duct 70. A connecting duct 90 may be provided between the first evaporator duct 60 and the second evaporator duct 70 to connect the first evaporator duct 60 and the second evaporator duct 70.

The cold air drawn into the inner channel 78 of the second evaporator duct 70 may be supplied to the first storage compartment 11 through a cold air outlet 72 formed at the front of the second evaporator duct 70.

As such, according to an embodiment of the present disclosure, the refrigerator may include the thermoelectric cooling device and the refrigeration cycle device, but is not limited thereto, and the refrigerator may include only the thermoelectric cooling device 400.

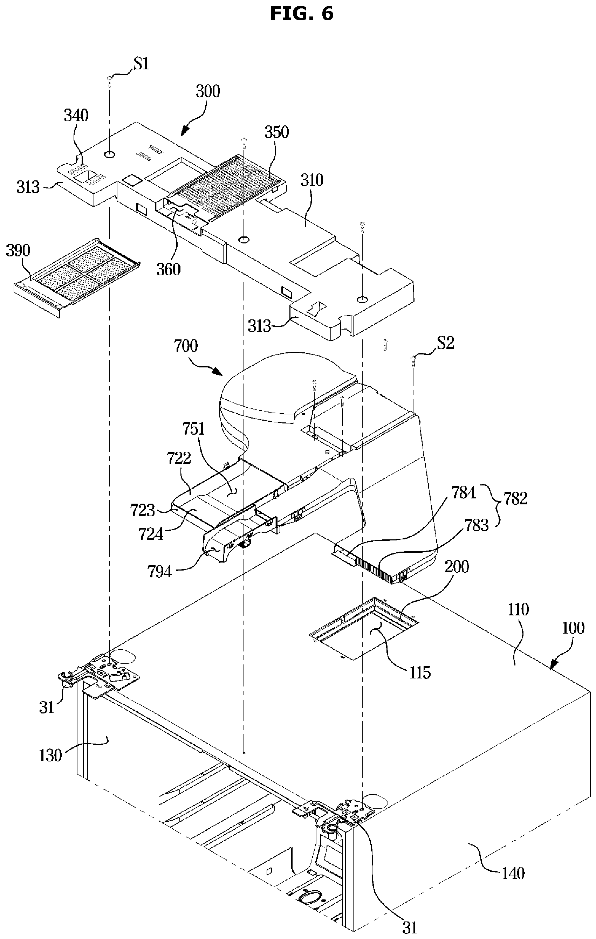

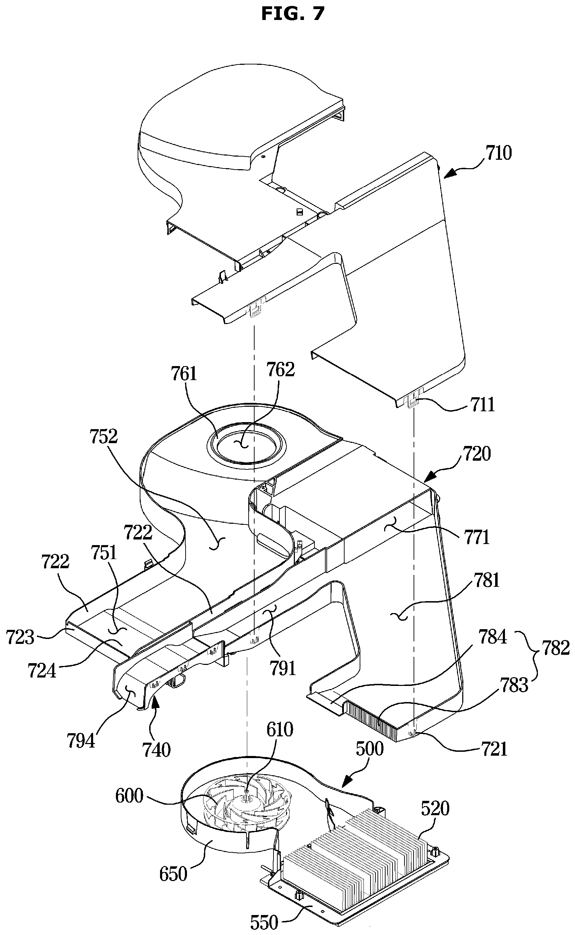

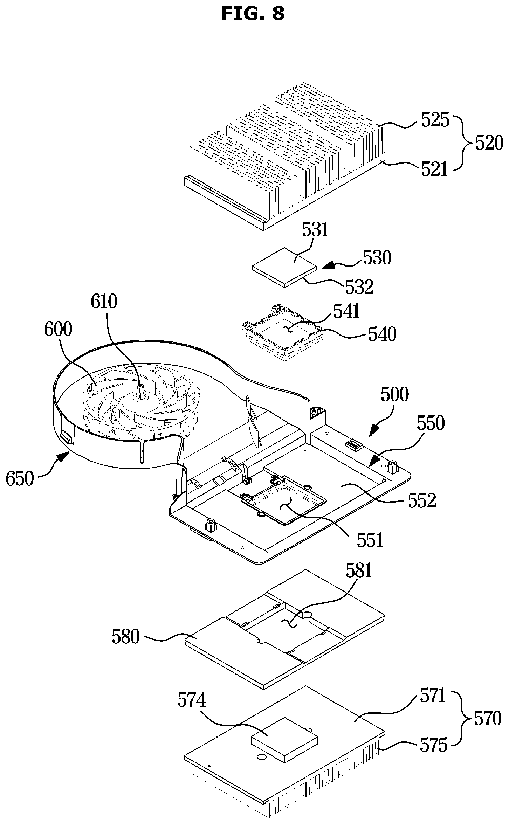

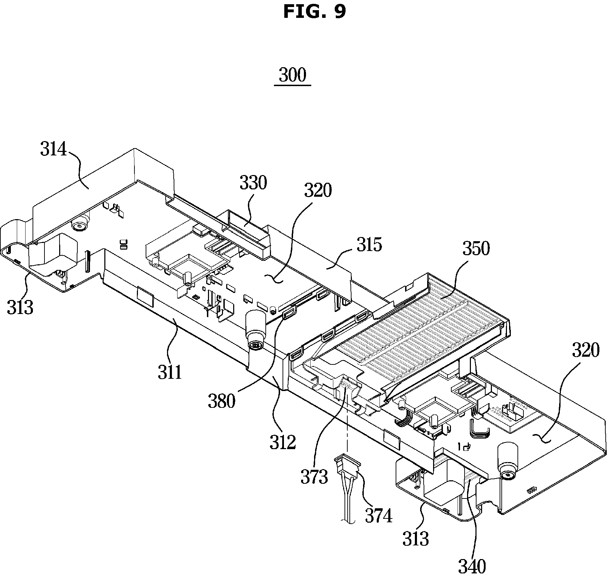

FIG. 6 is a view illustrating a top cover, a dust filter, and a heat dissipation duct separated from the main body of the refrigerator according to an embodiment of the present disclosure. FIG. 7 is a view illustrating a heat dissipation duct cover, a heat dissipation duct body, and a thermoelectric module according to an embodiment of the present disclosure in separation. FIG. 8 is an exploded view illustrating the thermoelectric module according to an embodiment of the present disclosure. FIG. 9 is a perspective view illustrating a lower surface of the top cover according to an embodiment of the present disclosure.

Referring to FIGS. 6 to 9, a through hole 115 connecting the inside of the storage compartment 11 and the outside of the main body 110 may be formed in the upper wall 110 of the main body 100. The main body 100 may include a connecting frame 200 disposed between the inner case 170 and the outer case 180 to form the through hole 115. With the connecting frame 200 disposed between the inner case 170 and the outer case 180, the inner case 170, the outer case 180, and the connecting frame 200 may be coupled to each other by filling and foaming a foam insulation material in an insulation space formed by the inner case 170, the outer case 180, and the connecting frame 200. The connecting frame 200 may be formed of a material having a low thermal conductivity. The connecting frame 200 may be formed of a resin material.

The thermoelectric cooling device 400 may include a thermoelectric module 500. The thermoelectric module 500 may include the thermoelectric element 530, the dissipating sink 520, the cooling sink 570, and a module plate 550. The thermoelectric module 500 may be arranged to penetrate the through hole 115 of the upper wall 110, such that the dissipating sink 520 may be positioned on the outside of the main body 100 and the cooling sink 570 may be positioned on the inside of the storage compartment 11.

The module plate 550 may serve as a framework of the thermoelectric module. The module plate 550 may be formed of a resin material having a low thermal conductivity. The module plate 550 may maintain the gap between the dissipating sink 520 and the cooling sink 570 and may support the dissipating sink 520 and the cooling sink 570. The module plate 550 may be integrally formed with a fan case 650. However, the module plate 550 may also be provided separately from the fan case 650.

The module plate 550 may include a heat sink support 552 that supports a dissipating sink 520. The module plate 550 may include a module plate opening 551. The thermoelectric element 530 may be disposed within the module plate opening 551. The cooling sink 570 may include a cooling conductor 574 that protrudes from the cooling sink base 571 for contact with the cooling portion 532 of the thermoelectric element 530.

The thermoelectric module 500 may include an element insulator 540 that insulates the module plate 550 and the thermoelectric element 530. The element insulator 540 may include an element insulator opening 541, and the thermoelectric element 530 may be accommodated in the element insulator opening 541.

The thermoelectric module 500 may include a sink insulator 580 disposed between the module plate 550 and the cooling sink 570. The sink insulator 580 may prevent heat from being transferred between the dissipating sink 520 and the cooling sink 570 through the module plate 550. The sink insulator 580 may include a sink insulator opening 581.

The thermoelectric cooling device 400 may include the fan case 650 in which the heat dissipation fan 600 is installed and guides the air blown by the heat dissipation fan 600. The fan case 650 may be integrally formed with the module plate 550 described above, or may be provided separately.

The heat dissipation fan 600 may be a centrifugal fan and may be installed on a case bottom such that the rotational shaft 610 is perpendicular to the case bottom. In addition, the dissipating sink 520 may be arranged to be positioned in the radial direction of the heat dissipation fan 600. Such an arrangement may allow the overall vertical length of the thermoelectric cooling device 400 to be compact.

The thermoelectric cooling device 400 may include the heat dissipation duct 700 arranged in the upper wall 110 to draw in air from the outside of the main body 100 and exchange heat with the dissipating sink 520, and to discharge the air that has exchanged heat with the dissipating sink 520 back to the outside of the main body 100.

The heat dissipation duct 700 may include a heat dissipation duct body 720, a heat dissipation duct cover 710, and an extension duct 740.

The heat dissipation duct body 720 may be coupled to the upper surface of the main body 100. The heat dissipation duct body 720 may cover the heat dissipation fan 600 and the dissipating sink 520. The external air inlet 751 may be formed on an upper surface of a front portion of the heat dissipation duct body 720, and the external air inlet 751 may be covered by the top cover 300. The front portion of the heat dissipation duct body 720 may include a floor 724, a front wall portion 723 extending upwardly from a front end of the floor 724, and side wall portions 722 extending upwardly from both ends of the floor 724.

The heat dissipation duct cover 710 may be coupled to the upper portion of the heat dissipation duct body 720 so as to cover the upper portion of the heat dissipation duct body 720. To this end, the heat dissipation duct cover 710 may be provided with a duct cover coupling portion 711, and the heat dissipation duct body 720 may be provided with a duct body coupling portion 721 coupled to the duct cover coupling portion 711. The duct cover coupling portion 711 and the duct body coupling portion 721 may be coupled in a hook or fitting manner.

The extension duct 740 may be provided in front of the heat dissipation duct body 720 so as to be connected to the heat dissipation duct body 720. The extension duct 740 may be formed separately from the heat dissipation duct body 720. However, alternatively, the extension duct 740 may also be integrally formed with the heat dissipation duct body 720.

The extension duct 740 may be disposed below the top cover 300, and the upper side of the extension duct 740 may be covered by the top cover 300. The extension duct 740 may be coupled to a lower portion of the top cover 300.

The heat dissipation duct 700 may include the external air inlet 751 arranged to draw in air from the outside of the main body. In particular, the heat dissipation duct body 720 may include the external air inlet 751.

The external air inlet 751 may be formed on an upper surface of the heat dissipation duct body 720. The external air inlet 751 may be positioned closer to the front of the main body 100 than to the rear of the main body 100. In other words, the external air inlet 751 may be positioned closer to a front end of the upper surface of the main body 100 based on a center of the upper surface of the main body 100.

As such, the reason why the external air inlet 751 is positioned closer to the front of the main body 100 than the rear of the main body 100 is to prevent and/or heat generated by the compressor 2, condenser, and the like, positioned at the rear of the main body 100 from being drawn in through the external air inlet 751.

The heat dissipation duct 700 may include external air outlets 782 and 794 that discharge air that has exchanged heat with the dissipating sink 520 to the outside of the main body 100.

The heat dissipation duct body 720 may include a first external air outlet 782 that discharges air that has exchanged heat with the dissipating sink 520 to the outside of the main body 100. The first external air outlet 782 may discharge air that has exchanged heat with the dissipating sink 520 toward an external space on the upper side of the main body 100.

The extension duct 740 may include a second external air outlet 794 that discharges air that has exchanged heat with the dissipating sink 520 toward the rotation bar 40. Because the air that has exchanged heat with the dissipating sink 520 is discharged toward the rotation bar 40, condensation may be prevented from occurring on the rotation bar 40.

However, the heat dissipation duct 700 is not necessarily required to include the first external air outlet 782 and the second external air outlet 794, and the second external air outlet 794 may be omitted.

The heat dissipation duct body 720 may include a fan receiving space 762 for receiving the heat dissipation fan 600. The fan receiving space 762 may be formed on a lower surface of the heat dissipation duct body 720. The heat dissipation duct body 720 may include a fan inlet 761 through which air is drawn into the fan receiving space 762.

The heat dissipation duct body 720 may include a sink receiving space 771 formed on a downstream side of the fan receiving space 762 so as to receive the dissipating sink 520.

The heat dissipation duct body 720 may include an intake space 752 formed on the upper surface of the heat dissipation duct body 720 to guide air drawn in through the external air inlet 751 into the fan receiving space 762. An upper side of the intake space 752 may be formed to be open, and the open upper side of the intake space 752 may be covered by the heat dissipation duct cover 710. The intake space 752 may be formed on an upstream side of the fan receiving space 762. The intake space 752 may be connected to the fan receiving space 762 through the fan inlet 761.

The heat dissipation duct body 720 may include a first discharge space 781 formed on the upper surface of the heat dissipation duct body 720 to guide air that has exchanged heat with the dissipating sink 520 to the first external air outlet 782. An upper side of the first exhaust space 781 is open, and the open upper side of the first exhaust space may be covered by the heat dissipation duct cover 710. The first discharge space 781 may be formed on a downstream side of the sink receiving space 771.

The heat dissipation duct body 720 may include a second discharge space 791 formed on the upper surface of the heat dissipation duct body 720 to guide air that has exchanged heat with the dissipating sink 520 into the second external air outlet 794. An upper side of the second discharge space 791 may be open, and the open upper side of the second discharge space 791 may be covered by the heat dissipation duct cover 710. The second discharge space 791 may be formed on the downstream side of the sink receiving space 771.

The thermoelectric module 500 and the heat dissipation duct 700 may be coupled to the upper wall 110 of the main body 100 by at least one fastener S2. The at least one fastener S2 may pass through the heat dissipation duct 700 and the thermoelectric module 500 in turn and may be fastened to the connecting frame 200 of the main body 100.

The refrigerator 1 may include the top cover 300 coupled to a front portion of the upper surface of the main body 100 to cover the plurality of hinges 31.

The top cover 300 may include a top cover upper surface portion 310, a top cover front portion 311 extending downwardly from a front edge of the top cover upper surface portion 310, top cover side portions 314 extending downwardly from both side edges of the top cover upper surface portion 310, a top cover rear portion 315 extending downwardly from a rear edge of the top cover upper surface portion 310, and a top cover internal space 320 formed by the top cover upper surface portion 310, the top cover front portion 311, the top cover side portions 314, and the top cover rear portion 315. A lower side of the top cover internal space 320 may be open, and the lower side of the top cover internal space 320 may be covered by the upper surface of the upper wall 110.

The top cover 300 may include forward protrusions 313 protruding forward from both ends of the top cover to cover the plurality of hinges 31.

The top cover 300 may be coupled to the upper wall 110 of the main body 100 by at least one fastener S1. After the thermoelectric module 500 and the heat dissipation duct 700 are coupled to the upper wall 110 of the main body 100, the top cover 300 may be coupled to the upper wall 110 of the main body 100.

At least a portion of the top cover 300 may be arranged to overlap the heat dissipation duct 700. At least a portion of the top cover 300 may be arranged on the upper side of the heat dissipation duct 700 to overlap the heat dissipation duct 700. In particular, an intake grille portion 350 of the top cover 300, which will be described later, may be arranged to overlap the external air inlet 751 of the heat dissipation duct 700.

The thermoelectric cooling device 400 may include a dust filter 390 configured to filter foreign substances from the air entering the external air inlet 751. The dust filter 390 may be mounted on the top cover 300. The top cover 300 may include a filter receiving space 360 formed below the intake grille portion 350 to receive the dust filter 390. The dust filter 390 received in the filter receiving space 360 may be supported on fixed rail portions 370 and a front support portion 371 of the top cover 300, which will be described later.

The top cover 300 may include an outlet forming portion 312 formed in the top cover front portion 311 of the top cover 300 to form the second external air outlet 794 with the extension duct 740. The outlet forming portion 312 may protrude forwardly from the top cover front portion 311.

At least a portion of the air discharged from the heat dissipation duct 700 through the first external air outlet 782 may be introduced into the top cover internal space 320. In other words, the air warmed by heat exchange with the dissipating sink 520 may be introduced into the top cover internal space 320. To this end, a top cover inlet 330 may be formed in the top cover 300. The top cover inlet 330 may be formed in the top cover rear portion 315.

The first external air outlet 782 may include a connection port 784 configured to guide air from the inside of the heat dissipation duct 700 to the top cover internal space 320. The connection port 784 of the heat dissipation duct 700 may be connected to the top cover inlet 330 of the top cover 300. The air discharged through the connection port 784 may be introduced into the top cover internal space 320 through the top cover inlet 330.

The first external air outlet 782 may include an outward outlet 783 partitioned from the connection port 784 to discharge air from the heat dissipation duct 700 to the outside of the top cover 300. An outlet grid may be formed in the outward outlet 783 to prevent foreign substances from entering the inside of the heat dissipation duct 700 through the outward outlet 783.

Air drawn into the top cover internal space 320 may pass through the top cover internal space 320 and be discharged to the outside of the top cover 300. To this end, the top cover 300 may include a top cover outlet 340. The top cover outlet 340 may be formed in the forward protrusions 313 of the top cover 300. The top cover outlet 340 may be formed in the forward protrusion 313 that is further away from the top cover inlet 330 of the forward protrusions 313. In other words, the top cover inlet 330 may be formed closer to the right hinge, and the top cover outlet 340 may be formed closer to the left hinge.

The top cover outlet 340 may be formed on an upper surface of the forward protrusions 313. Because the top cover outlet 340 is formed in the forward protrusion 313, the air discharged through the top cover outlet 340 may be prevented and/or reduced from being drawn back into the external air inlet 751.

The air that has exchanged heat with the dissipating sink 520 may heat the upper surface of the main body 100 while passing through the top cover internal space 320. Accordingly, condensation phenomenon on the front upper surface of the main body 100 may be prevented.

The top cover 300 may be provided with a top cover coupling portion 380 coupled to the extension duct 740. The top cover coupling portion 380 may be coupled to the extension duct 740 in a hook or fitting manner.

The top cover 300 may be provided with a filter sensor 374 that detects whether the dust filter 390 is mounted in the filter receiving space 360. The top cover 300 may be provided with a sensor mounting portion 373 on which the filter sensor 374 is mounted.

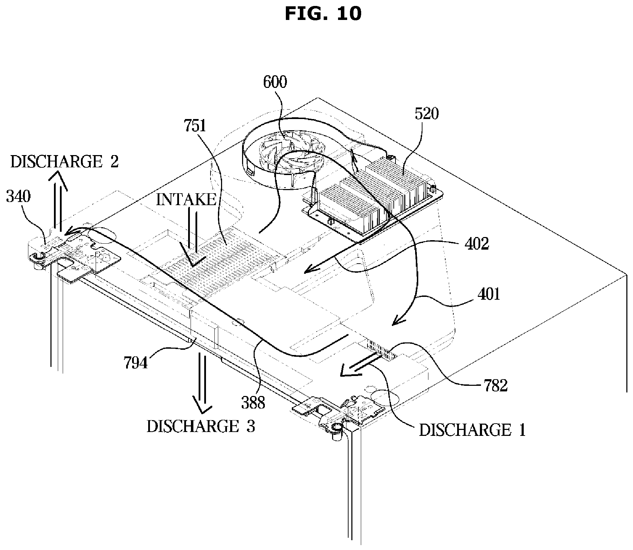

FIG. 10 is a view illustrating a flow of air through the heat dissipation fan, the heat dissipation duct, and the top cover according to an embodiment of the present disclosure.

Referring to FIG. 10, the refrigerator 1 may include a first heat dissipation flow path 401 through which air that has exchanged heat with the dissipating sink 520 is discharged to the outside of the main body 100, and a second heat dissipation flow path 402 through which air that has exchanged heat with the dissipating sink 520 is discharged toward the rotation bar 40. The second heat dissipation flow path 402 may be formed by branching off from the first heat dissipation flow path 401.

A portion of the air drawn in through the external air inlet 751 may be discharged to the outside of the main body 100 through the first heat dissipation flow path 401. In other words, a portion of the air drawn in through the external air inlet 751 may be discharged to the outside of the main body 100 through the first external air outlet 782 after heat exchange with the dissipating sink 520 ('discharge 1'in FIG. 10).

A portion of the air drawn in through the external air inlet 751 may be discharged to the outside of the main body 100 through the first heat dissipation flow path 401 and the top cover flow path 388. In other words, a portion of the air drawn in through the external air inlet 751 may pass through the inside of the top cover 300 after heat exchange with the dissipating sink 520 and may be discharged to the outside of the main body 100 through the top cover outlet 340 formed in the top cover 300 ('discharge 2'in FIG. 10).

A portion of the air drawn in through the external air inlet 751 may be discharged toward the rotation bar 40 through the second heat dissipation flow path 402. In other words, a portion of the air drawn in through the external air inlet 751 may be discharged downwardly toward the rotation bar 40 through the second external air outlet 794 after heat exchange with the dissipating sink 520 ('discharge 3' in FIG. 10).

The external air inlet 751 may be positioned at the front based on a front-to-back direction of the main body, so that hot air from a heat source, such as an evaporator or condenser, positioned at the rear of the main body may be less likely to be drawn in through the external air inlet 751.

In addition, since the external air inlet 751 may be positioned at a central portion based on a left-and-right directions of the main body, the first external air outlet 782 may be positioned near the right hinge, and the top cover outlet port 340 may be positioned near the left hinge, hot air discharged through the first external air outlet 782 and the top cover outlet 340 may be less likely to be drawn back through the external air inlet 751.

In addition, since the second external air outlet 794 may discharge air in a downward direction, hot air discharged through the second external air outlet 794 may be less likely to be drawn back through the external air inlet 751.

As described above, hot air from the heat source positioned at the rear of the main body and hot air discharged through the first external air outlet 782, the top cover outlet 340, and the second external air outlet 794 may be minimized from being drawn into the inside of the heat dissipation duct 700 through the external air inlet 751, thereby efficiently achieving heat dissipation of the thermoelectric element and consequently, improving the performance of the thermoelectric cooling device.

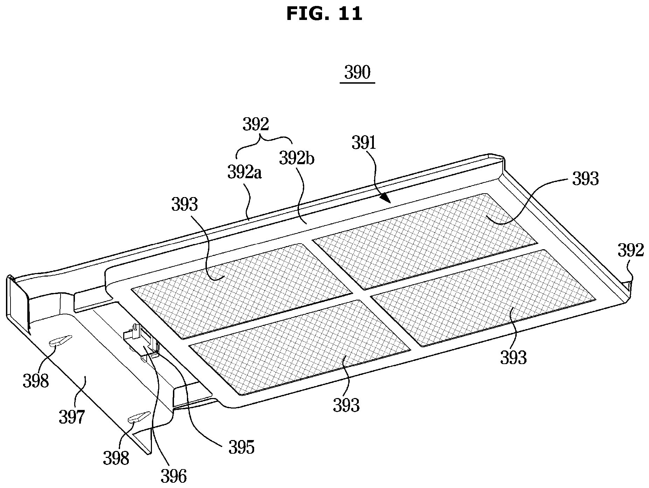

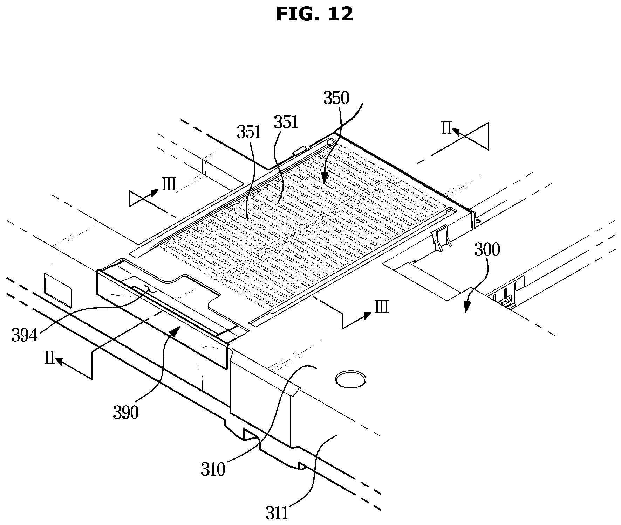

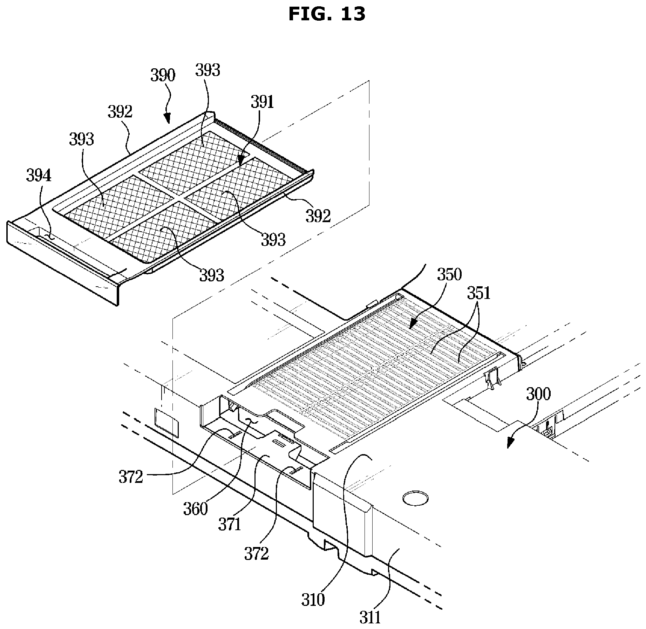

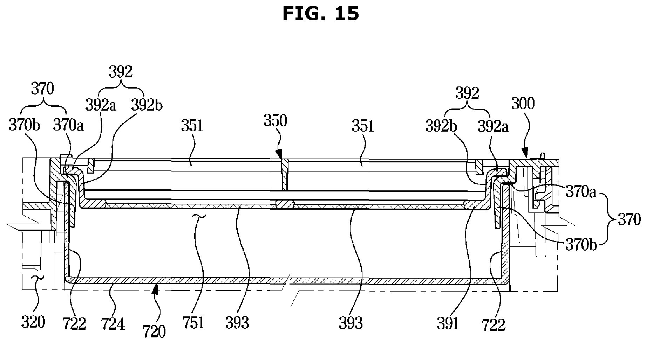

FIG. 11 is a perspective view illustrating a lower surface of the dust filter according to an embodiment of the present disclosure. FIG. 12 is a perspective view illustrating a state in which the dust filter is mounted on the top cover, according to an embodiment of the present disclosure. FIG. 13 is a perspective view illustrating a state in which the dust filter is removed from the top cover, according to an embodiment of the present disclosure. FIG. 14 is a cross-sectional view taken along line II-II of FIG. 12. FIG. 15 is a cross-sectional view taken along line III-III of FIG. 12.

Referring to FIGS. 11 to 15, a structure of the dust filter 390 according to an embodiment of the present disclosure will be described in detail.

As described above, the heat dissipation duct 700 may include the external air inlet 751 formed on the upper surface of the heat dissipation duct 700 so as to draw in air from the outside of the main body into the inside of the heat dissipation duct 700, and the dust filter 390 may be disposed in the external air inlet 751 so as to prevent foreign substances from entering through the external air inlet 751.

The dust filter 390 may include a filter member 393 for filtering out foreign substances, such as dust in the air, and a filter frame 391 for supporting the filter member 393. The filter member 393 may be any type of filter members for filtering or removing contaminants, bacteria, viruses, dust, and the like from the air. The filter member 393 may have a mesh shape.

The filter frame 391 may be formed to surround the filter member 393. The filter frame 391 may have a substantially rectangular shape. The frame 391 may support the filter member 393 such that the filter member 393 is spread flat. The dust filter 390 may include a handle 394 formed to be recessed in an upper surface of a front portion of the dust filter 390.

The dust filter 390 may be detachably mounted in the filter receiving space 360 of the top cover 300 to cover the external air inlet 751. The dust filter 390 may be slidably mounted or removed from the filter receiving space 360 of the top cover 300. The dust filter 390 may be arranged to be mountable in the filter receiving space 360 of the top cover 300 by sliding backward, and to be removable from the top cover 300 by sliding forward.

To this end, the dust filter 390 may include a pair of movable rail portions 392 formed to extend in the front-to-back direction on the filter frame 391. The pair of movable rail portions 392 may be formed on left and right ends of the filter frame 391.

The pair of movable rail portions 392 may each include a vertical movable rail portion 392b extending upwardly in a plane where the filter member 393 is formed, and a horizontal movable rail portion 392a extending horizontally from the vertical movable rail portion 392b.

The top cover 300 may be provided with a pair of fixed rail portions 370 that slidably support the pair of movable rail portions 392 of the dust filter 390. The pair of fixed rail portions 390 may be provided on one side and the opposite side of the filter receiving space 360. In other words, the pair of fixed rail portions 390 may be provided on the left and right sides of the filter receiving space 360.

The pair of fixed rail portions 370 may include a horizontal fixed rail portion 370a extending horizontally to support the horizontal movable rail portion 392a, and a vertical fixed rail portion 370b extending downwardly from the horizontal fixed rail portion 370a to support the vertical movable rail portion 392b.

As such, since the horizontal movable rail portion 392a of the dust filter 390 may be supported on the horizontal fixed rail portion 370a of the top cover 300, and the vertical movable rail portion 392b of the dust filter 390 may be supported on the vertical fixed rail portion 370b of the top cover 300, the dust filter 390 may be reliably supported in the vertical and horizontal directions on the top cover 300.

The pair of fixed rail portions 370 of the top cover 300 may be supported on the side wall portions 722 of the heat dissipation duct body 720.

However, according to an embodiment, the dust filter 390 may be mounted by being vertically seated in the filter receiving space 360 from the outside of the top cover 300, and may be arranged to be lifted and removed in the vertical direction.

The dust filter 390 may include retaining protrusions 398 coupled to the top cover 300 to ensure that the dust filter 390 remains mounted in the filter receiving space 360 of the top cover 300. The retaining protrusions 398 may be formed to protrude from a lower surface of a front portion 397 of the filter frame 391.

The top cover 300 may include the front support portion 371 that supports the front portion 397 of the filter frame 391. Fixing holes 372 into which the retaining protrusions 398 of the dust filter 390 is inserted may be formed on the front support portion 371. In response to the retaining protrusions 398 of the dust filter 390 being inserted into the fixing holes 372 of the top cover 300, the dust filter 390 may be secured to the top cover 300.

The top cover 300 may be provided with the filter sensor 374 that detects whether the dust filter 390 is mounted in the filter receiving space 360. The top cover 300 may include the sensor mounting portion 373 on which the filter sensor 374 is mounted. The sensor mounting portion 373 may be formed on a front portion of the top cover 300. The filter sensor 374 may be a reed switch including a plurality of reed pieces that may contact or be separated from each other by a magnetic force. However, the filter sensor 374 is not limited thereto, and may include a variety of sensors, such as a proximity sensor or a sensor using infrared wavelengths.

The dust filter 390 may be provided with a magnet 396 that may magnetically interact with the reed switch. The dust filter 390 may include a magnet mounting portion 395 on which the magnet 396 may be mountable. The magnet mounting portion 395 of the dust filter 390 may be formed at a position corresponding to the sensor mounting portion 373 of the top cover 300 based on the dust filter 390 being mounted in the filter receiving space 360 of the top cover 300.

In other words, based on the dust filter 390 being mounted in the filter receiving space 360 of the top cover 300, the magnet 396 of the dust filter 390 may be positioned in the vertical direction of the filter sensor 374 of the top cover 300 (see FIG. 14).

The filter sensor 374 may be in an on or off state depending on a separation distance from the magnet 396. For example, the filter sensor 374 may be in an off state when the separation distance from the magnet 396 is less than a given distance, and may be in an on state when the separation distance from the magnet 396 is greater than the given distance.

The refrigerator 1 may determine whether the dust filter 390 is mounted or not based on the status information of the filter sensor 374. Upon determining that the dust filter 390 is not mounted, the refrigerator 1 may be configured to notify a user that the dust filter 390 is not mounted, such as via a display, speaker, or the like.

The top cover 300 may include the intake grille portion 350 positioned on the upper side of the filter receiving space 360. The intake grille portion 350 may include a plurality of grille ribs 351 arranged to be spaced apart from each other.

The intake grille portion 350 may primarily block foreign substances from being drawn into the inside of the heat dissipation duct 700 prior to the dust filter 390. The intake grille portion 350 may protect the dust filter 390 by blocking an external force from being applied to the dust filter 390.

The intake grille portion 350 may guide the air drawn in through the external air inlet 751. In particular, the intake grille portion 350 may be arranged to allow air from the front based on the external air inlet 751 to be drawn into the external air inlet 751.

In particular, the plurality of grille ribs 351 of the intake grille portion 350 may each be formed to be inclined downwardly toward the rear. Each of the plurality of grille ribs 351 may be arranged to be inclined at a given angle a with respect to a horizontal plane.

As such, the intake grille portion 350 may be configured to draw in air from the front of the main body, so that hot air from the rear of the main body may be minimized from being drawn into the inside of the heat dissipation duct 700 and the efficiency of the thermoelectric cooling device 400 may be increased.

The refrigerator 1 may determine when to clean and replace the dust filter 390 based on information, such as the number of revolutions per minute of the heat dissipation fan 600. Upon determining that the dust filter 390 is due for cleaning and replacing, the refrigerator 1 may be configured to notify a user of the need for cleaning and replacing the dust filter 390 via a display, speaker, or the like.

As described above, since the dust filter 390 is positioned on the upper wall 110 of the main body 100, and the dust filter 390 is movable in the front-to-back direction to be mounted and dismounted from the top cover 300, the mounting, dismounting, cleaning, and replacement of the dust filter 390 may be facilitated, and consequently, the performance of the thermoelectric cooling device 400 may be sustainably maintained.

Although an embodiment in which the dust filter 390 is mounted on the top cover 300 has been described above, in some embodiments, the dust filter 390 may be configured to be mounted on the heat dissipation duct 600 rather than the top cover 300. In this case, the top cover 300 and the heat dissipation duct 600 may be arranged not to overlap each other, or the top cover 300 itself may be omitted.

In this case, the same structure provided in the top cover 300 of the embodiment described above may be provided in the heat dissipation duct 600.

For example, a filter receiving space that receives the dust filter 390, a structure that guides the mounting and dismounting of the dust filter 390 and supports the dust filter 390, an intake grille portion positioned on the upper side of the filter receiving space, and a filter sensor that detects whether the dust filter is mounted, and the like may be provided in the heat dissipation duct 600.

Although the above technical ideas of the disclosure have been described by way of specific embodiments, the scope of the disclosure is not limited to these embodiments. Various modifications and variations that can be made by those skilled in the art without departing from the technical ideas of the disclosure as set forth in the claims of the patent will be deemed to be within the scope of the disclosure.

## Claims

1. A refrigerator comprising:
a main body;
a storage compartment inside the main body;
a thermoelectric module on an upper portion of the storage compartment, and including:
a thermoelectric element including:
a heating portion, and
a cooling portion,
a dissipating sink in contact with the heating portion, and
a cooling sink in contact with the cooling portion;
a heat dissipation fan configured to generate a flow of air;
a heat dissipation duct having an external air inlet and an external air outlet, the heat dissipation duct on an upper surface of the main body and configured to guide the flow of air through the external air inlet to the dissipating sink to exchange heat with the dissipating sink, and then out of the external air outlet; and
a dust filter mountable on the external air inlet and configured so that, with the dust filter mounted on the external air inlet and the heat dissipation fan generating the flow of air, the dust filter prevents foreign substances in the flow of air from entering an inside of the heat dissipation duct through the external air inlet.

2. The refrigerator of claim 1, further comprising
a top cover couplable to the upper surface of the main body,
wherein, with the top cover coupled to the upper surface, at least a portion of the top cover overlaps the heat dissipation duct.

3. The refrigerator of claim 2, wherein the dust filter is mountable to the top cover and configured so that, with the top cover coupled to the upper surface, the dust filter mounted to the top cover, and the heat dissipation fan generating the flow of air, the dust filter prevents foreign substances in the flow of air from entering an inside of the heat dissipation duct through the top cover.

4. The refrigerator of claim 3, wherein the top cover includes a filter receiving space configured to receive the dust filter.

5. The refrigerator of claim 4, wherein
the dust filter is slidable in a first direction in the filter receiving space to be received in the filter receiving space, and
the dust filter is slidable in a second direction to be separated from the filter receiving space.

6. The refrigerator of claim 5, wherein the top cover includes a pair of fixed rail portions configured to support the dust filter when the dust filter is slid in the first direction and the second direction.

7. The refrigerator of claim 6, wherein
a first fixed rail portion of the pair of fixed rail portions is on one side of the filter receiving space, and
a second fixed rail portion of the pair of fixed rail portions is on an other side of the filter receiving space opposite the one side.

8. The refrigerator of claim 4, wherein the top cover includes an intake grille portion on an upper side of the filter receiving space that includes a plurality of grille ribs spaced apart from each other.

9. The refrigerator of claim 8, wherein the plurality of grille ribs slope downwardly toward a rear of the top cover.

10. The refrigerator of claim 6, wherein the dust filter includes:
a filter member configured to filter foreign substances from the flow of air, and
a filter frame configured to support the filter member.

11. The refrigerator of claim 10, wherein
the filter frame includes a pair of movable rail portions including:
a first movable rail portion on a first end of the filter frame, and configured to be slidably supported on a first fixed rail portion of the pair of fixed rail portions, and
a second movable rail portion on a second end of the filter frame, and configured to be slidably supported on a second fixed rail portion of the pair of fixed rail portions.

12. The refrigerator of claim 11, wherein
each fixed rail portion of the pair of fixed rail portions includes:
a horizontal fixed rail portion extending in a horizontal direction, and
a vertical fixed rail portion extending downwardly from the horizontal fixed rail portion, and
each movable rail portion of the pair of movable rail portions includes:
a horizontal movable rail portion configured to be supported on the horizontal fixed rail portion, and
a vertical movable rail portion configured to be supported on the vertical fixed rail portion.

13. The refrigerator of claim 2, further comprising a filter sensor on the top cover and configured to detect whether the dust filter is mounted.

14. The refrigerator of claim 13, wherein
the dust filter includes a magnet, and
the filter sensor includes a reed switch configured to change between an on state and an off state based on a separation distance between the reed switch and the magnet.

15. The refrigerator of claim 1, wherein the external air inlet is positioned closer to a front end of the upper surface of the main body than a central portion is to the front end.
